# EUROPÄISCHE PATENTSCHRIFT

(11) **EP 3 949 737 B1**
(45) Veröffentlichungstag und Bekanntmachung des Hinweises auf die Patenterteilung: **22.01.2025**
(21) Anmeldenummer: 21184316.4
(22) Anmeldetag: 07.07.2021
(51) Int. Cl.: A21B 1/48

(54) **DURCHLAUF-BACKOFEN FÜR DEN KONTINUIERLICHEN BACKBETRIEB**
CIRCULATION OVEN FOR CONTINUOUS BAKING
FOUR À CUIRE À PASSAGE CONTINU POUR LE MODE DE CUISSON CONTINU

(30) Priorität: 10.07.2020 DE 102020208674
(43) Veröffentlichungstag der Anmeldung: 09.02.2022
(73) Patentinhaber: Werner & Pfleiderer Industrielle Backtechnik GmbH, 71732 Tamm (DE)
(72) Erfinder:
(74) Vertreter: Rau, Schneck & Hübner Patentanwälte Rechtsanwälte PartGmbB

(56) Entgegenhaltungen:
- DE-A1- 19 820 061
- DE-A1- 3 536 008
- US-A- 5 277 105
- US-A1- 2017 245 671
- US-A1- 2019 373 899

## Beschreibung

Die vorliegende Patentanmeldung nimmt die Priorität der deutschen Patentanmeldung DE 10 2020 208 674.5 in Anspruch, deren Inhalt durch Bezugnahme hierin aufgenommen wird.

Die Erfindung betrifft einen Durchlauf-Backofen für den kontinuierlichen Backbetrieb.

Ein derartiger Durchlauf-Backofen ist bekannt aus der EP 1 729 584 B1, der DE 1 095 223 A, der DE 26 29 716 A1, der DE 10 2018 208 959 A1 und der US 1,832,374. Die DE 10 2019 212 937 B3 (Veröffentlichungstag: 13.08.2020) offenbart ebenfalls einen Durchlauf-Backofen für den kontinuierlichen Backbetrieb. Die US 2017/0 245 671 A1 offenbart eine mehretagige Durchlauf-Koch- beziehungsweise Bratanlage. Die DE 35 36 008 A1 offenbart einen Backofen mit einer Heizgas- oder Heißluft-Umwälzheizung. Die DE 198 20 061 A1 offenbart einen Mehretagen-Durchlaufofen aus mehreren Ofen-Modulen. Die US 2019/0 373 899 A1 offenbart einen Durchlauf-Backofen. Die US 5,277,105 offenbart einen stapelbaren Durchlaufofen.

Es ist eine Aufgabe der vorliegenden Erfindung, einen Durchlauf-Backofen der eingangs genannten Art so weiterzubilden, dass er effizient und angepasst an unterschiedliche Durchsatzanforderungen betrieben werden kann.

Diese Aufgabe ist erfindungsgemäß gelöst durch einen Durchlauf-Backofen mit den im Anspruch 1 angegebenen Merkmalen. Erfindungsgemäß wurde erkannt, dass eine Heizvorrichtung mit zwei Heizeinrichtungen, die jeweils einen Brenner zur Erzeugung von Heißgas und einen Heißgas-Ventilator aufweisen, in Kombination mit der modularen Bauweise des Durchlauf-Backofens zur Möglichkeit führt, die Ofenmodule der übereinanderliegenden Durchlauf-Backräume wahlweise mit Heißgas zu beaufschlagen. Insbesondere können die mindestens zwei Etagen des Durchlauf-Backofens separat voneinander betrieben werden, was die Einsatz-Variabilität und/oder die Durchsatz-Variabilität des Durchlauf-Backofens erhöht. Für diesen separaten Betrieb ist eine Steuerung des Durchlauf-Backofens entsprechend ausgeführt, sodass wahlweise genau einer der Durchlauf-Backräume oder mehrere Durchlauf-Backräume oder, soweit mehr als zwei Durchlauf-Backräume vorhanden sind, alle Durchlauf-Backräume insbesondere indirekt beheizt werden können. Mit dem mehrstöckigen Durchlauf-Backofen lässt sich eine Durchsatz-Variabilität erreichen, die sonst nur deutlich aufwendigeren Ofenkonstruktionen, z .B. thermoölbeheizten Tunnel-Öfen vorbehalten war. Ein maximaler Backgut-Durchsatz, der mit dem Durchlauf-Backofen realisiert sein kann, kann mehr als doppelt so groß sein wie ein minimaler Backgut-Durchsatz und kann mehr als doppelt so groß und beispielsweise dreimal so groß sein. Es ist zudem möglich, unterschiedliche Produkte durch die verschiedenen Durchlauf-Backräume zu fahren.

Der Durchlauf-Backofen kann genau zwei übereinanderliegende Durchlauf-Backräume aufweisen. Alternativ ist es möglich, dass der Durchlauf-Backofen mehr als zwei übereinanderliegende Durchlauf-Backräume, z. B. drei, vier oder auch fünf übereinanderliegende Durchlauf-Backräume aufweist. Die wahlweise indirekte Beheizung über die erste Heizeinrichtung kann zum Beheizen genau eines Anfangs-Ofenmoduls, genau zweier Anfangs-Ofenmodule oder, falls mehr als zwei Durchlauf-Backräume übereinanderliegend angeordnet sind, von mehr als zwei Anfangs-Ofenmodulen und insbesondere aller Anfangs-Ofenmodule genutzt werden. Entsprechendes gilt für die zweite Heizeinrichtung, die beim Vorhandensein von mehr als zwei übereinanderliegenden Durchlauf- Backräumen mindestens ein Ofenmodul genau einer Etage oder auch mindestens ein Ofenmodul von zwei oder, bei einer Anzahl von mehr als zwei Etagen, von zum Beispiel allen Etagen genutzt werden.

Zu jedem der verschiedenen Durchlauf-Backräume des Durchlaufofens können mehrere und voneinander separate Ofenmodule gehören, sodass ein flexibler Aufbau des Durchlauf-Backofens mit einer an die jeweiligen Anforderungen angepassten Anzahl von Ofenmodulen pro Durchlauf-Backraum möglich ist.

Durch die Gestaltung mit den beiden über ihre jeweiligen Brenner und Ventilatoren unabhängig betreibbaren Heizeinrichtungen lässt sich eine sehr große Flexibilität der Heißgas-Beaufschlagung der jeweiligen Ofenmodule erreichen. Neben einer unabhängigen Beaufschlagung der Durchlauf-Backräume können, wiederum über die Steuerung des Durchlauf-Backofens, auch die hintereinanderliegenden Ofenmodule genau eines Durchlauf-Backraums unabhängig beaufschlagt werden, so dass innerhalb eines Backraums und auch im Vergleich zwischen den zwei Backräumen verschiedene Backkurven und/oder verschiedene Temperaturzonen realisiert werden können.

Die Backgut-Fördereinrichtungen zum Fördern des Backguts durch die Durchlauf-Backräume können unabhängig voneinander ansteuerbar sein. Die Durchlauf-Backräume können damit mit unterschiedlichen Fördergeschwindigkeiten betrieben werden. Unterschiedliche Produkte können durch die verschiedenen Durchlauf-Backräume gefahren werden.

Bei einer Heizeinrichtung nach Anspruch 2 ist diese zum indirekten Beheizen mehrerer Ofenmodule genau eines Durchlauf-Backraums oder mehrerer Durchlauf-Backräume ausgeführt. Dies trägt der Tatsache Rechnung, dass nach dem jeweiligen Anfangs-Ofenmodul eine Heizleistung zur ausreichenden Beheizung der folgenden Ofenmodule jeweils geringer ist. Innerhalb einer Etage, also innerhalb eines Durchlauf-Backraums, kann die zweite Heizeinrichtung genau ein Ofenmodul oder wahlweise mehrere Ofenmodule beheizen.

Alternativ oder zusätzlich kann auch die erste Heizeinrichtung zum wahlweisen indirekten Beheizen mindestens eines weiteren Ofenmoduls der dem Anfangs-Ofenmodul folgenden Ofenmodule genau eines der Durchlauf-Backräume oder mindestens eines weiteren Ofenmoduls der dem Anfangs-Ofenmodul folgenden Ofenmodule mehrerer Durchlauf-Backräume ausgeführt sein. Die jeweils erste Heizeinrichtung kann also beispielsweise das Anfangs-Ofenmodul, wahlweise ein nachfolgendes Ofenmodul eines ersten Durchlauf-Backraums sowie wahlweise das Anfangs-Ofenmodul sowie wiederum wahlweise ein nachfolgendes Ofenmodul eines weiteren Durchlauf-Backraums indirekt beheizen.

Bei einer Anordnung der Heißgas-Komponenten nach Anspruch 3 saugt der Heißgas-Ventilator das Heißgas aus dem Strömungsweg, kommend von den Ofenmodulen, hin zum jeweiligen Brenner. Ein hierbei entstehender Unterdruck im aus den Ofenmodulen kommenden Strömungsweg sorgt für eine gleichmäßige Heißgas-Strömung durch Radiatoren der Ofenmodule des mindestens einen Durchlauf-Backraums.

Eine Drossel-Baugruppe nach Anspruch 4 hat sich in der Praxis zur flexiblen Vorgabe einer jeweiligen Heißgas-Beaufschlagung bewährt. Die Heißgas-Drosseln können als Schieber ausgeführt sein. Es kann sich um Drosseln handeln, mit denen eine stufenweise Vorgabe eines Strömungsweg-Querschnitts möglich ist, oder um Drosseln für eine kontinuierliche Querschnitts-Vorgabe. Auch einfache Schieber, die nur eine Offen- und eine Schließstellung haben, sind möglich. Auch verschiedene derartige Drossel-Ausführungen können beim Durchlauf-Backofen zum Einsatz kommen, je nachdem, welche Anforderungen an die jeweilige Heißgas-Drossel gestellt werden.

Eine wahlweise Oberhitze-/Unterhitze-Vorgabe nach Anspruch 5 erhöht die Flexibilität bei einer Vorgabe der Backbedingungen nochmals.

Die Vorteile einer Drossel-Baugruppe nach Anspruch 6 entsprechen denen, die vorstehend bereits erläutert wurden. Bei einer Heizeinrichtung, die so ausgeführt ist, dass wahlweise ein Ofenmodul oder mehrere Ofenmodule eines Durchlauf-Backraums mit Heißgas beaufschlagt werden können, kann eine individuelle Backkurve bzw. unterschiedliche Temperaturzonen vorgegeben werden.

Eine Modulbauweise nach Anspruch 7 ist in der Herstellung besonders kostengünstig.

Die Anzahl der Ofenmodule eines Backraums kann im Bereich zwischen zwei und zehn liegen.

Ein Ausführungsbeispiel der Erfindung wird nachfolgend anhand der Zeichnung näher erläutert. In dieser zeigen:
- Fig. 1: stark schematisch eine Seitenansicht eines modular aufgebauten, zweistöckigen Durchlauf-Backofens; und
- Fig. 2: in einer ähnlichen Ansicht, die innere Details zeigt, Komponenten einer Heizvorrichtung zum indirekten Beheizen von Durchlauf-Backräumen des Durchlauf-Backofens, insbesondere Komponenten eines Heißgas-Strömungsweges durch die Ofenmodule des Backofens.

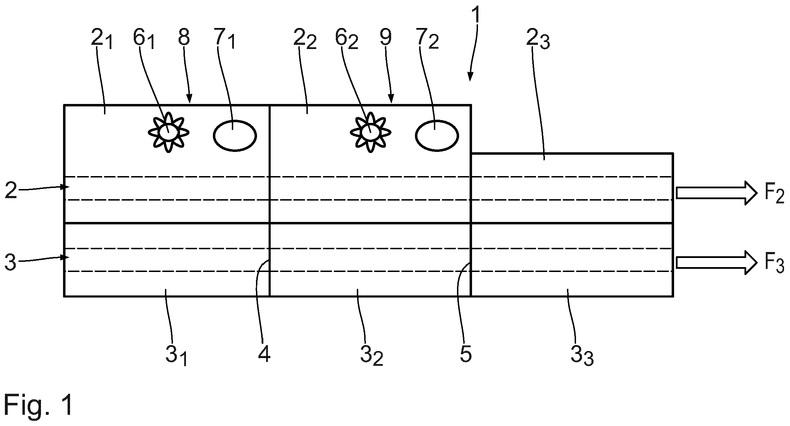

Fig. 1 zeigt stark schematisch eine Gesamt-Seitenansicht eines als Tunnelofen ausgeführten zweistöckigen Durchlauf-Backofens 1. Mit dem Durchlauf-Backofen 1 kann z. B. Dauerbackgebäck in Form von Weichkeksen, Hartkeksen oder Laugengebäck produziert werden. Auch anderes Backgut, z. B. Toast- oder Weizenbrot, kann im Backofen 1 verarbeitet werden. Mit dem Backofen 1 ist auch ein Rösten und als Spezialanwendung auch ein Trocknen oder Sterilisieren möglich.

Der Backofen 1 hat zwei übereinanderliegende Durchlauf-Backräume 2, 3, die von Teil-Backräumen von Ofenmodulen 2₁, 2₂, 2₃ sowie 3₁, 3₂, 3₃ gebildet werden. Die beiden in der Fig. 1 links dargestellten Ofenmodule 2₁, 3₁ stellen in einer Backgut-Förderrichtung F₂, F₃ der Durchlauf-Backräume 2, 3 jeweils führende Anfangs-Ofenmodule dar. Die beiden in der Fig. 1 rechts dargestellten Ofenmodule 2₃, 3₃ stellen jeweils in der Backgut-Förderrichtung F₂, F₃ letzte Abschluss-Ofenmodule der Durchlauf-Backräume 2, 3 dar. Die beiden in der Fig. 1 in der Mitte dargestellten Ofenmodule 2₂, 3₂ stellen jeweils in der Backgut-Förderrichtung F₂, F₃ mittlere Ofenmodule der Durchlauf-Backräume 2, 3 dar.

Der Durchlauf-Backraum 2 liegt über dem Durchlauf-Backraum 3.

Zum kontinuierlichen Fördern des Backguts zwischen dem jeweiligen Anfangs-Ofenmodul 2₁, 3₁ und dem jeweiligen Abschluss-Ofenmodul 2₃, 3₃ des jeweiligen Durchlauf-Backraums 2, 3 längs der Förderrichtung F₂, F₃ dient mindestens eine nicht näher dargestellte Backgut-Fördereinrichtung, bei der es sich um ein dem jeweiligen Durchlauf-Backraum 2, 3 zugeordnetes Endlos-Förderband handeln kann. Es können auch mehrere Backgut-Fördereinrichtungen, insbesondere in Form von Endlos-Förderbändern, vorgesehen sein, die zum Fördern des Backguts durch die Durchlauf-Backräume 2, 3 insbesondere unabhängig voneinander ansteuerbar sind. Diese Ansteuerung erfolgt über eine insbesondere zentrale Steuerung des Durchlauf-Backofens 1.Mit Hilfe dieser mehreren Backgut-Fördereinrichtungen können die Durchlauf-Backräume 2, 3 mit unterschiedlichen Fördergeschwindigkeiten betrieben werden.

In der Fig. 1 sind insgesamt drei Ofenmodule 2₁ bis 2₃, die zum oberen Durchlauf-Backraum 2 gehören, und darunterliegend drei Ofenmodule 3₁ bis 3₃ dargestellt, die zum unteren Durchlauf-Backraum 3 des Durchlauf-Backofens 1 gehören. Die Anzahl der Ofenmodule 2ᵢ, 3ᵢ des jeweiligen Durchlauf-Backraums 2, 3 kann auch von drei abweichen und kann im Bereich zwischen 2 und beispielsweise 10 liegen.

Die Ofenmodule 2₁ bis 2₃ einerseits sowie 3₁ bis 3₃ andererseits haben jeweils die gleiche Länge in der Förderrichtung F₂, F₃ und liegen genau übereinander, so dass sie gemeinsam Modul-Stoßkanten 4, 5 bilden. Die Ofenmodule 2ᵢ und 3ᵢ haben jeweils den gleichen Grundaufbau, insbesondere was eine Tragrahmengestaltung sowie Aufnahmen für An- und Einbauteile angeht. Die Ofenmodule 2ᵢ, 3ᵢ haben in der Förderrichtung F₂, F₃ jeweils die gleiche Länge und quer zu der Förderrichtung F₂, F₃, also senkrecht zur Zeichenebene der Fig. 1, die gleiche Breite. Die Ofenmodule 2ᵢ, 3ᵢ können, was Höhe, Breite und Tiefe angeht, jeweils die gleichen Abmessungen und grundsätzlich die gleichen Bauraumerfordernisse haben.

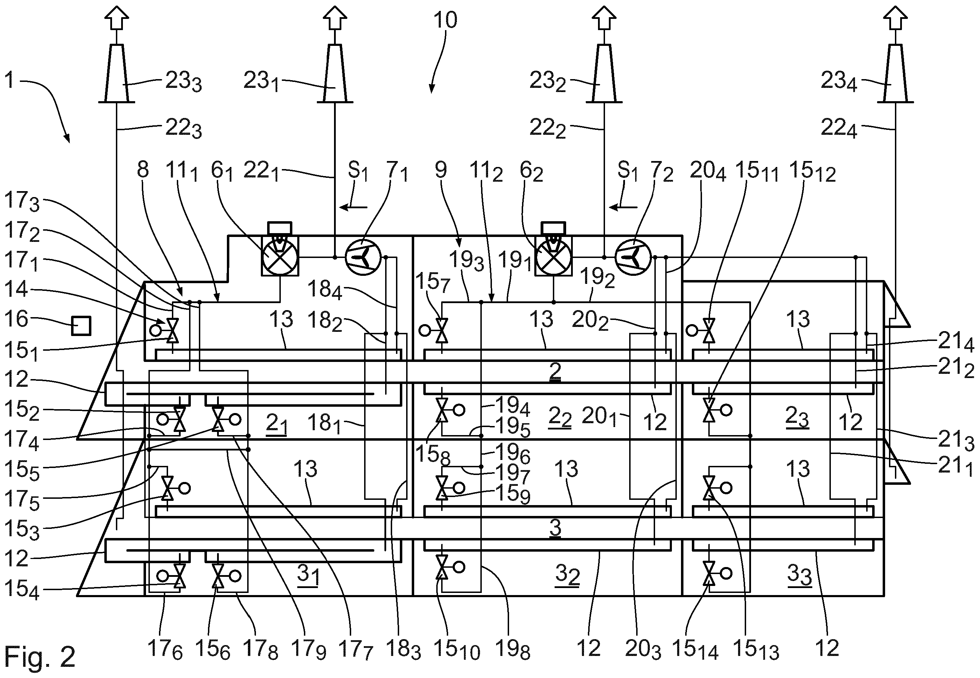

Die beiden führenden Ofenmodule 2₁ und 2₂ des oberen Durchlauf-Backraums 2 haben jeweils einen Brenner 6₁, 6₂ und einen Heißgas-Ventilator 7₁, 7₂. Der Brenner 6₁ und der Heißgas-Ventilator 7₁ sind Bestandteile einer ersten Heizeinrichtung 8 zum wahlweisen indirekten Beheizen eines der Anfangs-Ofenmodule 2₁, 3₁ der Durchlauf-Backräume 2, 3 oder beider Anfangs-Ofenmodule 2₁, 3₁. Der Brenner 6₂ und der Heißgas-Ventilator 7₂ sind Bestandteile einer zweiten Heizeinrichtung 9 zum wahlweisen indirekten Beheizen mindestens eines Ofenmoduls 2₂, 2₃, 3₂, 3₃ der dem jeweiligen Anfangs-Ofenmodul 2₁, 3₁ folgenden Ofenmodule genau eines Durchlauf-Backraums 2, 3 oder beider Durchlauf-Backräume 2, 3. Die beiden Heizeinrichtungen 8, 9 werden nachfolgend anhand der Fig. 2 näher erläutert.

Die beiden Heizeinrichtungen 8, 9 sind Bestandteile einer Heizvorrichtung 10 zum indirekten Beheizen der Durchlauf-Backräume 2, 3 mit einem Heißgas über einen Heißgas-Strömungsweg 11. Dieser Strömungsweg 11 hat einen ersten Heißgas-Kreislauf 11₁ der ersten Heizeinrichtung 8 und einen zweiten Heißgas-Kreislauf 11₂ der zweiten Heizeinrichtung 9. Diese Kreisläufe 11₁, 11₂ haben zueinander sequentielle sowie zueinander parallele Teilstränge zur Heißgas-Führung, wie nachfolgend noch beschrieben wird.

Teil der Heißgas-Strömungswege 11₁, 11₂ ist jeweils ein Unterhitze-Radiator 12 und jeweils ein Oberhitze-Radiator 13 für die Durchlauf-Backräume 2 bzw. 3.

Eine Strömungsrichtung des Heißgases längs eines Heißgas-Kreislaufes durch die Heißgas-Strömungswege 11₁, 11₂ ist mit Pfeilen S₁, S₂ in der Fig. 2 verdeutlicht.

Der jeweilige Heißgas-Ventilator 7₁, 7₂ ist im zugehörigen Heißgas-Strömungsweg 11₁, 11₂ vor dem jeweiligen Brenner 6₁, 6₂ angeordnet.

Zur Heizvorrichtung 10 gehört weiterhin eine Drossel-Baugruppe 14 mit jeweils als ansteuerbaren Schiebern 15ᵢ ausgeführten Heißgas-Drosseln, die in den Heißgas-Strömungswegen 11₁, 11₂ angeordnet sind. Diese Schieber 15ᵢ stehen mit einer zentralen Steuereinrichtung 16 des Durchlauf-Backofens 1 in nicht dargestellter Weise in Signalverbindung. Die Steuereinrichtung 16 steht auch mit der mindestens einen Backgut-Fördereinrichtung bzw. mit den Backgut-Fördereinrichtungen in Signalverbindung.

Der Heißgas-Strömungsweg 11₁ verzweigt sich im Strömungsweg nach dem Brenner 6₁ zunächst in einen Teilstrang 17₁ hin zum Oberhitze-Radiator 13 des Ofenmoduls 2₁, sowie in weitere Teilstränge 17₂, 17₃. Im Teilstrang 17₁ ist der erste Schieber 15₁ angeordnet.

Der Teilstrang 17₂ verzweigt sich weiter in einen Teilstrang 17₄ zur Versorgung eines führenden Abschnitts des Unterhitze-Radiators 12 des Ofenmoduls 2₁ über den Schieber 15₂, in einen Teilstrang 17₅ zur Versorgung des Oberhitze-Radiators 13 des Ofenmoduls 3₁ über den Schieber 15₃ und in einen Teilstrang 17₆ zur Versorgung eines führenden Abschnitts des Unterhitze-Radiators 12 des Ofenmoduls 3₁ über den Schieber 15₄.

Der Teilstrang 17₃ verzweigt sich in vergleichbarer Weise in einen weiteren Teilstrang 17₇ zur Versorgung eines dem führenden Abschnitt nachfolgenden Abschnitts des Unterhitze-Radiators 12 des Ofenmoduls 2₁ über den Schieber 15₅ und in einen weiteren Teilstrang 17₈ zur Versorgung des dem führenden Abschnitt nachfolgenden Abschnitts des Unterhitze-Radiators 12 des Ofenmoduls 3₁ über den Schieber 15₆. Die beiden Teilstränge 17₂ (zwischen den Abzweigungen der Teilstränge 17₄ und 17₅) und 17₈ stehen über einen Verbindungs-Teilstrang 17₉ des Heißgas-Strömungsweges 11₁ miteinander in Strömungsverbindung.

Über die Teilstränge 17₁ und die weiteren Heißgas-Zufuhr-Teilstränge 17i des Heißgas-Strömungsweges 11₁ lassen sich
- die Oberhitze 13 des Ofenmoduls 2₁,
- der führende Abschnitt der Unterhitze 12 des Ofenmoduls 2₁,
- der nachfolgende Abschnitt der Unterhitze 12 des Ofenmoduls 2₁,
- die Oberhitze 13 des Ofenmoduls 3₁,
- der führende Abschnitt der Unterhitze 12 des Ofenmoduls 3₁ und
- der nachfolgende Abschnitt der Unterhitze 12 des Ofenmoduls 3₁ mit Heißgas zur Erzeugung entsprechender Oberhitze und/oder Unterhitze wahlweise, gesteuert über die Schieber 15ᵢ und die Steuereinrichtung 16, beaufschlagen.

Rücklaufseitig hat der Heißgas-Strömungsweg 11₁ einen Teilstrang 18₁ auf, der Heißgas aus der Unterhitze 12 des Ofenmoduls 3₁ abführt, einen Teilstrang 18₂, der Heißgas aus der Unterhitze 12 des Ofenmoduls 2₁ abführt, einen Teilstrang 18₃, der Heißgas aus der Oberhitze 13 des Ofenmoduls 3₁ abführt und einen Teilstrang 18₄, der Heißgas aus der Oberhitze 13 des Ofenmoduls 2₁ abführt. Diese Heißgas-Abführ-Teilstränge 18ᵢ vereinigen sich vor dem Heißgas-Ventilator 7₁ des Heißgas-Kreislaufs 11₁.

Der Heißgas-Ventilator 7₁ saugt das Heißgas über die Teilstränge 18ᵢ aus den jeweiligen Unterhitze-Radiatoren 12 und/oder den Oberhitze-Radiatoren 13 der beiden Anfangs-Ofenmodule 2₁, 3₁, denen über die jeweils geöffneten Schieber 15ᵢ und die Teilstränge 17ᵢ das Heißgas zugeführt wird.

Der Heißgas-Strömungsweg 11₂ verzweigt sich nach dem Brenner 6₂ zunächst in Teilstränge 19₁ zur wahlweisen Heißgas-Beaufschlagung der Unterhitze-Radiatoren 12 und/oder der Oberhitze-Radiatoren 13 der Ofenmodule 2₂ und 3₂ sowie 19₂ zur wahlweisen Heißgas-Beaufschlagung der Unterhitze-Radiatoren 12 und/oder der Oberhitze-Radiatoren 13 der nachfolgenden Ofenmodule 2₃ und 3₃. Eine Auswahl der Heißgas-Beaufschlagung ist dabei möglich zwischen beliebigen der Ofenmodule 2₂, 2₃, 3₂, 3₃ sowie innerhalb des jeweiligen Ofenmoduls 2ᵢ, 3ᵢ zwischen Ober- und/oder Unterhitze.

Über die Heißgas-Strömungswege 11₁, 11₂ kann genau ein Ofenmodul 2ᵢ, 3ᵢ oder es können wahlweise auch mehrerer Ofenmodule 2ᵢ, 3ᵢ mit Heißgas beaufschlagt werden.

Der Teilstrang 19₁ verzweigt sich in einen Teilstrang 19₃ zur Heißgas-Beaufschlagung des Oberhitze-Radiators 13 des Ofenmoduls 2₂ über den Schieber 15₇ und in einen Teilstrang 19₄. Dieser verzweigt sich wiederum in einen Teilstrang 19₅ zur Heißgas-Beaufschlagung des Unterhitze-Radiators 12 des Ofenmoduls 2₂ über den Schieber 15₈ und in einen Teilstrang 19₆. Letzterer verzweigt sich wiederum in einen Teilstrang 19₇ zur Beaufschlagung des Oberhitze-Radiators 13 des Ofenmoduls 3₂ über den Schieber 15₉ und einen Teilstrang 19₈ zur Beaufschlagung des Unterhitze-Radiators 12 des Ofenmoduls 3₂ über den Schieber 15₁₀.

In entsprechender Weise verzweigt sich der Teilstrang 19₂ in Teilstränge zur Beaufschlagung des Oberhitze-Radiators 13 des Ofenmoduls 2₃ über den Schieber 15₁₁, zur Beaufschlagung des Unterhitze-Radiators 12 des Ofenmoduls 2₃ über den Schieber 15₁₂, zur Beaufschlagung des Oberhitze-Radiators 13 des Ofenmoduls 3₃ über den Schieber 15₁₃ und zur Beaufschlagung des Unterhitze-Radiators 12 des Ofenmoduls 3₃ über den Schieber 15₁₄.

Über die Schieber 15₇ bis 15₁₀ im dem Teilstrang 19₁ folgenden Abschnitt des Heißgas-Strömungsweges 11₂ sowie über die Schieber 15₁₁ bis 15₁₄ über den dem Teilstrang 19₂ folgenden Abschnitt des Heißgas-Strömungsweges 11₁ ist eine wahlweise indirekte Beheizung der den Anfangs-Ofenmodulen 2₁, 3₁ folgenden Ofenmodule 2₂, 2₃ einerseits und 3₂, 3₃ andererseits der Durchlauf-Backräume 2, 3 möglich.

Ein Abführen des Heißgases über die jeweils beaufschlagten Unterhitze-Radiatoren 12 bzw. Oberhitze-Radiatoren 13 der Ofenmodule 2₂, 2₃, 3₂, 3₃ erfolgt über wiederum diese Unterhitze-Radiatoren 12 und Oberhitze-Radiatoren 13 mit dem Heißgas-Ventilator 7₂ verbindenden Teilsträngen 20ᵢ, 21ᵢ (i = 1 bis 4), deren Anordnungen den Teilsträngen 18ᵢ des Heißgas-Strömungsweges 11₁ entsprechen und daher nicht nochmals im Einzelnen erläutert werden.

Zwischen den jeweiligen Brennern 6₁, 6₂ und den zugeordneten Heißgas-Ventilatoren 7₁, 7₂ zweigt aus den Heißgas-Strömungswegen 11₁, 11₂ jeweils eine Abluftleitung 22₁, 22₂ ab, die in einen Abluftkamin 23₁, 23₂ mündet. Dargestellt sind in der Fig. 2 weiterhin zwei Dunstabzugsleitungen 22₃, 22₄ mit zugeordneten Abluftkaminen 23₃, 23₄, die einerseits am Anfang der Anfangs-Ofenmodule 2₁, 3₁ und andererseits am Ende der Abschluss-Ofenmodule 2₃, 3₃ durch den Kamineffekt Luft aus dem Bereich von Ofentüren am Anfang sowie am Ende der Durchlauf- Backräume 2, 3 nach außen bringen und dabei insbesondere einen Luftvorhang zwischen den Durchlauf-Backräumen 2, 3 und dem Umgebungsraum bilden.

Mit der ersten Heizeinrichtung 8 lässt sich wahlweise das Ofenmodul 2₁ und/oder das Ofenmodul 3₁ beheizen, wobei wiederum beim mindestens einen ausgewählten Ofenmodul 2₁, 3₁ wahlweise Oberhitze und/oder Unterhitze vorgegeben werden kann.

Über die zweite Heizeinrichtung 9 lassen sich wahlweise die Ofenmodule 2₂, 2₃ des oberen Durchlauf-Backraums 2 und/oder die Ofenmodule 3₂, 3₃ des unteren Durchlauf-Backraums 3 beheizen, wobei auch hier wiederum wahlweise Oberhitze und/oder Unterhitze vorgebbar sind.

Jede der beiden Heizeinrichtungen 8, 9 hat einen Brenner 6₁, 6₂ und einen Heißgas-Ventilator 7₁, 7₂.

Bei einer alternativen Variante der Heizvorrichtung 10 kann die zweite Heizeinrichtung 9 zum wahlweisen indirekten Beheizen genau eines der dem Anfangs-Ofenmodul 2₁, 2₂ jeweils folgenden Ofenmodule der Durchlauf-Backräume 2, 3 dienen, also zum wahlweisen Beheizen beispielsweise der Ofenmodule 2₂ und 3₂, nicht aber zum zusätzlichen wahlweisen Beheizen der Ofenmodule 2₃ und 3₃. In diesem Fall kann die zweite Heizeinrichtung 9, was den Heißgas-Strömungsweg 11₂, angeht, genauso aufgebaut sein wie die erste Heizeinrichtung 8.

Mit Hilfe der ansteuerbaren Schieber 15ᵢ können die beiden Etagen des Durchlauf-Backofens 1 insbesondere separat voneinander betrieben werden, also entweder nur der Durchlauf-Backraum 2, nur der Durchlauf-Backraum 3 oder auch beide Durchlauf-Backräume 2 und 3.

Die Längen der Ofenmodule 2ᵢ, 3ᵢ längs der Backgut-Fördererrichtung F₂, F₃ können unterschiedlich sein. Es ist beispielsweise möglich, dass das Anfangs-Ofenmodul 2₁, 3₁ länger oder kürzer ist als die nachfolgenden Ofenmodule 2ᵢ, 3ᵢ. Weiterhin ist es möglich, dass das jeweilige Abschluss-Ofenmodul 2₃, 3₃ kürzer oder länger ist als die vorhergehenden Ofenmodule 2ᵢ, 3ᵢ.

Über die wahlweise Heißgas-Beaufschlagung der Ofenmodule 2ᵢ/3ᵢ können längs der Durchlauf-Backräume 2, 3 verschiedene Temperaturzonen vorgegeben werden.

Jeder der Durchlauf-Backräume kann unabhängig vom anderen mit einem Backgut-Durchsatz im Bereich zwischen 2000 Stück pro Stunde und 3000 Stück pro Stunde betrieben werden. Der Durchlauf-Backofen 1 kann also mit einem minimalen Durchsatz von 2000 Stück pro Stunde (Betrieb eines der beiden Durchlauf-Backräume 2 oder 3) oder mit einem maximalen Durchsatz von 6000 Stück pro Stunde betrieben werden, wobei innerhalb dieser Grenzen je nach Bedarf der Durchsatz praktisch kontinuierlich gewählt werden kann. Die in diesem Absatz genannten Stückzahlen gelten für Brote, sind also produktabhängig. Für Brötchen können die genannten Stückzahlen beispielsweise jeweils um einen Faktor 3 größer sein. Der gesamte Betrieb des Durchlauf-Backofens 1 kann über die zentrale Steuerung vorgegeben werden.

Aufgrund der insbesondere über die zentrale Steuerung herbeigeführten Unabhängigkeit der indirekten Beheizung der Durchlauf-Backräume können bei diesem zweistöckigen Durchlauf-Backofen auch unterschiedliche Produkte zur gleichen Zeit gebacken werden. Hierfür können die Backgut-Fördereinrichtungen der beiden Durchlauf-Backräume bei Bedarf auch mit unterschiedlichen Geschwindigkeiten betrieben werden und es können unterschiedliche Backkurven, d. h. unterschiedliche Temperaturzonen der Durchlauf-Backräume 2, 3 realisiert werden.

## Patentansprüche

1. Durchlauf-Backofen (1) für den kontinuierlichen Backbetrieb,
- mit mindestens zwei übereinanderliegenden Durchlauf-Backräumen (2, 3),
- mit einer Mehrzahl von Ofenmodulen (2ᵢ, 3ᵢ) mit Teil-Backräumen, die zusammen die Durchlauf-Backräume (2, 3) zwischen jeweils einem in Backgut-Förderrichtung (F₂, F₃) führenden Anfangs-Ofenmodul (2₁, 3₁) und jeweils einem in der Backgut-Förderrichtung (F₂, F₃) letzten Abschluss-Ofenmodul (2₃, 3₃) bilden,
- wobei die Ofenmodule (2ᵢ, 3ᵢ) derart mehrstöckig angeordnet sind, dass hierüber die mindestens zwei übereinanderliegenden Durchlauf-Backräume (2, 3) vorgegeben sind,
- mit mindestens einer Backgut-Fördereinrichtung zum kontinuierlichen Fördern von Backgut zwischen dem jeweiligen Anfangs-Ofenmodul (2₁, 3₁) und dem jeweiligen Abschluss-Ofenmodul (2₃, 3₃) eines der Durchlauf-Backräume (2, 3),
- mit einer Heizvorrichtung (10) zum indirekten Beheizen der Durchlauf-Backräume (2, 3) mit einem Heißgas über einen Heißgas-Strömungsweg (11₁, 11₂),
- wobei die Heizvorrichtung (10) aufweist:
-- eine erste Heizeinrichtung (8) zum wahlweisen indirekten Beheizen eines der Anfangs-Ofenmodule (2₁, 3₁) genau eines der Durchlauf-Backräume (2; 3) oder mehrerer Anfangs-Ofenmodule (2₁, 3₁) mehrerer Durchlauf-Backräume (2, 3),
-- eine zweite Heizeinrichtung (9) zum wahlweisen indirekten Beheizen
--- mindestens eines Ofenmoduls (2₂, 2₃; 3₂, 3₃) der dem Anfangs-Ofenmodul (2₁; 3₁) folgenden Ofenmodule (2ᵢ, 3ᵢ) genau eines der Durchlauf-Backräume (2; 3) oder
--- mindestens eines Ofenmoduls (2₂, 2₃, 3₂, 3₃) der dem Anfangs-Ofenmodul (2₁; 3₁) folgenden Ofenmodule (2ᵢ, 3ᵢ) mehrerer Durchlauf-Backräume (2, 3),
- wobei jede der Heizeinrichtungen (8, 9) der Heizvorrichtung (10) einen Brenner (6₁, 6₂) und einen Heißgas-Ventilator (7₁, 7₂) aufweist,
- wobei der Durchlauf-Backofen (1) so ausgeführt ist, dass die durch die Mehrstöckigkeit der Anordnung der Ofenmodule (2ᵢ, 3ᵢ) gebildeten mindestens zwei Etagen des Durchlauf-Backofens (1) separat voneinander betrieben werden können.

2. Durchlauf-Backofen nach Anspruch 1, **dadurch gekennzeichnet, dass** die zweite Heizeinrichtung (9) zum wahlweisen indirekten Beheizen
- mindestens zweier Ofenmodule (2₂, 2₃; 3₂, 3₃) der dem Anfangs-Ofenmodul (2₁; 3₁) folgenden Ofenmodule (2ᵢ, 3ᵢ) genau eines der Durchlauf-Backräume (2, 3) oder
- mindestens zweier Ofenmodule (2₂, 2₃, 3₂, 3₃) der dem Anfangs-Ofenmodul (2₁, 3₁) folgenden Ofenmodule (2ᵢ, 3ᵢ) mehrerer Durchlauf-Backräume (2, 3)
ausgeführt ist.

3. Durchlauf-Backofen nach Anspruch 1 oder 2, **dadurch gekennzeichnet, dass** der Heißgas-Ventilator (7₁, 7₂) in einem Strömungsweg (11₁, 11₂) des Heißgases vor dem Brenner (6₁, 6₂) angeordnet ist.

4. Durchlauf-Backofen nach einem der Ansprüche 1 bis 3, **gekennzeichnet durch** eine Drossel-Baugruppe (14) mit einer Mehrzahl von Heißgas-Drosseln (15ᵢ) im Heißgas-Strömungsweg (11₁, 11₂), wobei die Heißgas-Drosseln (15ᵢ) mit einer zentralen Steuereinrichtung (16) des Durchlauf-Backofens (1) in Signalverbindung stehen.

5. Durchlauf-Backofen nach Anspruch 4, **gekennzeichnet durch** eine Anordnung der Heißgas-Drosseln (15ᵢ) so, dass wahlweise Oberhitze und/oder Unterhitze über die Heizeinrichtungen (8, 9) vorgebbar ist.

6. Durchlauf-Backofen nach einem der Ansprüche 4 oder 5, **gekennzeichnet durch** eine Anordnung der Heißgas-Drosseln (15ᵢ) so, dass eine Heißgasführung wahlweise über ein Ofenmodul (2₁; 3ᵢ) eines Durchlauf-Backraums (2, 3) oder über mindestens zwei Ofenmodule (2₂, 2₃; 3₂, 3₃) des Durchlauf-Backraums (2, 3) über die Heizeinrichtung (9) vorgebbar ist.

7. Durchlauf-Backofen nach einem der Ansprüche 1 bis 6, **dadurch gekennzeichnet, dass** zumindest einige der Ofenmodule (2ᵢ, 3ᵢ) einen gleichen Grundaufbau aufweisen.

## Claims

1. Continuous oven (1) for continuous baking,
- having at least two continuous baking chambers (2, 3) lying one on top of the other,
- having a plurality of oven modules (2₁, 3₁) with partial baking chambers, which together form the continuous baking chambers (2, 3) between a respective initial oven module (2₁, 3₁) leading in the baked goods conveying direction (F₂, F₃) and a respective final oven module (2₃, 3₃) in the baked goods conveying direction (F₂, F₃),
- wherein the oven modules (2₁, 3₁) are arranged on multiple levels in such a way that the at least two continuous baking chambers (2, 3) lying one on top of the other are thereby provided,
- having at least one baked goods conveying device for continuously conveying baked goods between the respective initial oven module (2₁, 3₁) and the respective final oven module (2₃, 3₃) of one of the continuous baking chambers (2, 3),
- having a heater (10) for indirectly heating the continuous baking chambers (2, 3) with a hot gas via a hot gas flow path (11₁, 11₂), wherein the heater (10) has:
-- a first heating device (8) for selectively indirectly heating one of the initial oven modules (2₁, 3₁) of exactly one of the continuous baking chambers (2; 3) or a plurality of initial oven modules (2₁, 3₁) of a plurality of continuous baking chambers (2, 3),
-- a second heating device (9) for selectively indirectly heating
--- at least one oven module (22, 23; 32, 33) of the oven modules (21, 31) following the initial oven module (21; 31) of exactly one of the continuous baking chambers (2; 3) or
--- at least one oven module (22, 23; 32, 33) of the oven modules (21, 31) following the initial oven module (2₁; 3₁) of a plurality of continuous baking chambers (2, 3),
- wherein each of the heating devices (8, 9) of the heater (10) has a burner (6₁, 6₁) and a hot gas fan (7₁, 7₂),
- wherein the continuous oven (1) is designed such that the at least two levels of the continuous oven (1) formed by the multi-level arrangement of the oven modules (2₁, 3₁) can be operated separately from one another.

2. Continuous oven according to claim 1, **characterised in that**
- the second heating device (9) is designed to selectively indirectly heat at least two oven modules (2₂, 2₃; 3₂, 3₃) of the oven modules (2₁, 3₁) following the initial oven module (2₁; 3₁) of exactly one of the continuous baking chambers (2, 3) or
- at least two oven modules (2₂, 2₃; 3₂, 3₃) of the oven modules (2₁, 3₁) following the initial oven module (2₁, 3₁) of a plurality of continuous baking chambers (2, 3).

3. Continuous oven according to claim 1 or 2, **characterised in that** the hot gas fan (7₁, 7₂) is arranged in a flow path (11₁, 11₂) of the hot gas upstream of the burner (6₁, 6₂).

4. Continuous oven according to one of claims 1 to 3, **characterised by** a throttle assembly (14) having a plurality of hot gas throttles (15₁) in the hot gas flow path (11₁, 11₂), wherein the hot gas throttles (15₁) are in signal connection with a central control device (16) of the continuous oven (1).

5. Continuous oven according to claim 4, **characterised by** an arrangement of the hot gas throttles (15₁) such that top heat and/or bottom heat can be selectively provided via the heating devices (8, 9).

6. Continuous oven according to either one of claims 4 or 5, **characterised by** an arrangement of the hot gas throttles (15₁) such that a hot gas supply can be selectively provided via an oven module (2₁; 3₁) of a continuous baking chamber (2, 3) or via at least two oven modules (2₂, 2₃; 3₂, 3₃) of the continuous baking chamber (2, 3) via the heating device (9).

7. Continuous oven according to one of claims 1 to 6, **characterised in that** at least some of the oven modules (2₁, 3₁) have the same basic structure.

## Revendications

1. Four à passage continu (1) pour le service de cuisson continu,
- doté d'au moins deux espaces de cuisson à passage continu (2, 3) situés l'un au-dessus de l'autre,
- doté d'une pluralité de modules de four (2ᵢ, 3ᵢ) comportant des espaces de cuisson partiels qui forment conjointement les espaces de cuisson à passage continu (2, 3) entre respectivement un module de four initial (2₁, 3₁) qui est en tête dans la direction de transport de produit à cuire (F₂, F₃) et respectivement un module de four terminal (2₃, 3₃) qui est le dernier dans la direction de transport de produit à cuire (F₂, F₃),
- dans lequel les modules de four (2ᵢ, 3ᵢ) sont agencés sur plusieurs étages de manière à prédéfinir ainsi les au moins deux espaces de cuisson à passage continu (2, 3) situés l'un au-dessus de l'autre,
- doté d'au moins un moyen de transport de produit à cuire pour le transport continu de produit à cuire entre le module de four initial (2₁, 3₁) respectif et le module de four terminal (2₃, 3₃) respectif de l'un des espaces de cuisson à passage continu (2, 3),
- doté d'un dispositif de chauffage (10) pour le chauffage indirect des espaces de cuisson à passage continu (2, 3) avec un gaz chaud par le biais d'une voie d'écoulement de gaz chaud (11₁, 11₂),
- dans lequel le dispositif de chauffage (10) présente :
-- un premier moyen de chauffage (8) pour le chauffage indirect sélectif d'un des modules de four initiaux (2₁, 3₁) d'exactement un des espaces de cuisson à passage continu (2 ; 3) ou de plusieurs modules de four initiaux (2₁, 3₁) de plusieurs espaces de cuisson à passage continu (2, 3),
-- un second moyen de chauffage (9) pour le chauffage indirect sélectif
--- d'au moins un module de four (2₂, 2₃ ; 3₂, 3₃) des modules de four (2ᵢ, 3ᵢ) suivant le module de four initial (2₁ ; 3₁) d'exactement un des espaces de cuisson à passage continu (2 ; 3) ou
--- d'au moins un module de four (2₂, 2₃, 3₂, 3₃) des modules de four (2ᵢ, 3ᵢ) suivant le module de four initial (2₁ ; 3₁) de plusieurs espaces de cuisson à passage continu (2, 3),
- dans lequel chacun des moyens de chauffage (8, 9) du dispositif de chauffage (10) présente un brûleur (6₁, 6₂) et un ventilateur pour gaz chaud (7₁, 7₂),
- dans lequel le four à passage continu (1) est conçu de telle manière que les au moins deux étages du four à passage continu (1) formés par l'agencement sur plusieurs étages des modules de four (2ᵢ, 3ᵢ) peuvent être exploités séparément l'un de l'autre.

2. Four à passage continu selon la revendication 1, **caractérisé en ce que** le second moyen de chauffage (9) est conçu pour le chauffage indirect sélectif
- d'au moins deux modules de four (2₂, 2₃ ; 3₂, 3₃) des modules de four (2ᵢ, 3ᵢ) suivant le module de four initial (2₁ ; 3₁) d'exactement un des espaces de cuisson à passage continu (2 ; 3) ou
- d'au moins deux modules de four (2₂, 2₃, 3₂, 3₃) des modules de four (2ᵢ, 3ᵢ) suivant le module de four initial (2₁, 3₁) de plusieurs espaces de cuisson à passage continu (2, 3).

3. Four à passage continu selon la revendication 1 ou 2, **caractérisé en ce que** le ventilateur pour gaz chaud (7₁, 7₂) est agencé dans une voie d'écoulement (11₁, 11₂) du gaz chaud avant le brûleur (6₁, 6₂).

4. Four à passage continu selon l'une des revendications 1 à 3, **caractérisé par** un ensemble de réducteurs de débit (14) doté d'une pluralité de réducteurs de débit de gaz chaud (15ᵢ) dans la voie d'écoulement de gaz chaud (11₁, 11₂), les réducteurs de débit de gaz chaud (15ᵢ) étant en liaison de signalisation avec un moyen de commande central (16) du four à passage continu (1).

5. Four à passage continu selon la revendication 4, **caractérisé par** un agencement des réducteurs de débit de gaz chaud (15ᵢ) de telle sorte que la chaleur voûte et/ou la chaleur sole peut être prédéfinie de manière sélective par le biais des moyens de chauffage (8, 9).

6. Four à passage continu selon l'une des revendications 4 ou 5, **caractérisé par** un agencement des réducteurs de débit de gaz chaud (15ᵢ) de telle sorte qu'un guidage de gaz chaud peut être prédéfini de manière sélective à l'aide du moyen de chauffage (9) de façon à passer par un module de four (2ᵢ ; 3ᵢ) d'un espace de cuisson à passage continu (2, 3) ou par au moins deux modules de four (2₂, 2₃ ; 3₂, 3₃) de l'espace de cuisson à passage continu (2, 3).

7. Four à passage continu selon l'une des revendications 1 à 6, **caractérisé en ce qu'**au moins certains des modules de four (2ᵢ, 3ᵢ) présentent une construction de base identique.
